(19) **Europäisches Patentamt**

**European Patent Office**

**Office européen des brevets**

(11) Veröffentlichungsnummer: **0 326 978**
**A1**

(12) # EUROPÄISCHE PATENTANMELDUNG

(21) Anmeldenummer: 89101499.5

(22) Anmeldetag: 28.01.89

(51) Int. Cl.⁴: **C01G 49/00 , G11B 5/706 , H01F 1/11**

(30) Priorität: 05.02.88 DE 3803468

(43) Veröffentlichungstag der Anmeldung:
09.08.89 Patentblatt 89/32

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Mair, Gunther, Dr.**
**Corneliusstrasse 15**
**D-6800 Mannheim 25(DE)**
Erfinder: **Ohlinger, Manfred, Dr.**
**Anselm-Feuerbach-Strasse 13**
**D-6710 Frankenthal(DE)**
Erfinder: **Feser, Rainer, Dr.**
**Colgensteiner Weg 25**
**D-6718 Gruenstadt(DE)**

(54) **Verfahren zur Herstellung hexagonaler Ferrite.**

(57) Die Erfindung betrifft ein Verfahren zur Herstellung von hexagonalen Ferriten nach dem Glasverfahren durch Ausbilden einer Schmelze oder eines homogenen Gemisches aus den den Ferrit bildenden Metallverbindungen und mindestens einer zur Glasbildung geeigneten Verbindung, Tempern der Schmelze oder des Gemisches und anschließendes Auflösen der Glasmatrix mit einer im wesentlichen aus einer Säure mit einem chemischen Sauerstoffbedarf von weniger als ein Mol Sauerstoff pro Mol Säure bestehenden Säure zur Isolierung der Ferritsubstanz.

EP 0 326 978 A1

EP 0 326 978 A1

## Verfahren zur Herstellung hexagonaler Ferrite

Die Erfindung betrifft ein Verfahren zur Herstellung von hexagonalen Ferriten nach dem Glasverfahren durch Ausbilden einer Schmelze oder eines homogenen Gemisches aus den den Ferrit bildenden Metallverbindungen und mindestens einer zur Glasbildung geeigneten Verbindung, Tempern der Schmelze oder des Gemisches und anschließendes Auflösen der Glasmatrix mittels einer Säure zur Isolierung der Ferritsubstanz.

Hexagonale Ferrite mit sehr unterschiedlicher Zusammensetzung finden als magnetische Materialien auf vielen Gebieten Verwendung. Während sie früher vorwiegend zur Herstellung von Permanentmagneten eingesetzt wurden, sind sie seit einiger Zeit auch für die Herstellung von magnetischen Speichermaterialien von Interesse. Dabei spielen neben den magnetischen Eigenschaften, wie Koerzitivfeldstärke und Sättigungsmagnetisierung, vor allem die Teilchenform, die Teilchengröße, die möglichst einheitliche Teilchengrößenverteilung sowie die leichte Aufteilbarkeit der Teilchenagglomerate eine wesentliche Rolle.

Die Herstellung hexagonaler Ferrite, insbesondere substituierter Ferrite vom Barium-, Strontium- oder Bleiferrit-Typ ist bekannt. Sie erfolgt neben dem seit langem bekannten kermaischen Verfahren sowie dem Fluxverfahren nunmehr vorwiegend nach dem Glasverfahren. Dazu werden Oxide der ferritbildenden Metalle zusammen mit einer Glasbildungssubstanz, z.B. Borate, Phosphate, Silikate aufgeschmolzen, dann die Schmelze zu einem im wesentlichen nicht kristallinen Glas abgeschreckt, daraufhin die Glasmasse getempert, damit sich die ferritische Phase bilden kann und schließlich die Glassubstanz mit einer schwachen Säure, wie z.B. Citronensäure, Essigsäure, Oxalsäure, Weinsäure, aufgelöst, so daß die Ferritteilchen zurückbleiben (u.a. DE-A 2 026 736, US-A 4 569 775, EP-A 136 599). Diese Verfahren haben jedoch den Nachteil, daß sie sich sehr aufwendig gestalten und zum Aufschmelzen der Oxide sehr hohe Temperaturen erforderlich sind. Es ist auch schon vorgeschlagen worden, eine feste Mischung aus Salzen der den Ferrit bildenden Kationen mit einer Glaskomponente herzustellen und nur nach einem Sintervorgang durch Herauslösen der Glaskomponenten den Ferrit zu gewinnen. Den Glasverfahren gemeinsam ist der Nachteil, daß beim Herauslösen der Ferritsubstanz aus der Glasmatrix große Mengen wäßriger saurer Lösungen von z.B. Barium und Borat anfallen, welche aufgrund ihres hohen Anteils an organischer Substanz nicht mehr in den Syntheseweg zurückgeführt werden können.

Aufgabe der Erfindung war es, die Herstellung der Ferrite nach dem Glasverfahren so zu modifizieren, daß bei einer einfachen Prozeßführung sowohl aus Kostengründen als auch aus Gründen einer möglichst geringen Umweltbelastung die anfallenden Lösungen wieder in das Verfahren zurückgeführt werden können.

Es wurde nun gefunden, daß die Aufgabe bei einem Verfahren zur Herstellung von hexagonalen Ferriten nach dem Glasverfahren durch Ausbilden einer Schmelze oder eines homogenen Gemisches aus den den Ferrit bildenden Metallverbindungen und mindestens einer zur Glasbildung geeigneten Verbindung, Tempern der Schmelze oder des Gemisches und anschließendes Auflösen der Glasmatrix mittels einer Säure zur Isolierung der Ferritsubstanz gelöst werden kann, wenn die zum Auflösen der Glasmatrix verwendete Säure im wesentlichen aus einer Säure mit einem chemischen Sauerstoffbedarf von weniger als ein Mol Sauerstoff pro Mol Säure besteht.

In besonders vorteilhafter Weise läßt sich beim erfindungsgemäßen Verfahren die Glasmatrix mit einer Säure auflösen, welche im wesentlichen aus einer nichtoxidierbaren Säure besteht.

Besonders geeignete Säuren im Sinne der Erfindung sind Salpetersäure, Salzsäure und Ameisensäure. Diese Säuren werden zweckmäßigerweise in Konzentrationen von bis zu 10-normal eingesetzt. Wesentlich ist jedoch, daß der überwiegende Teil der zur Auflösung der Glasmatrix eingesetzten Säuren einen chemischen Sauerstoffgehalt von weniger als 1 Mol Sauerstoff pro Mol Säure aufweist. Dies bedeutet, daß sie unter oxidativen Reaktionsbedingungen nur mit einer sehr geringen Wärmeentwicklung reagieren. Unter dieser Bedingung lassen sich zu den erfindungsgemäß verwendeten Säuren geringe Mengen der an sich für das Auflösen der Glasmatrix bekannten schwachen organischen Säuren zumischen. Diese Menge bemißt sich nach der Kontrollierbarkeit der durch diese organischen Säuren bei der Rückführung der beim Auflösen der Glasmatrix entstehenden Lösungen in den Ferritherstellungsprozeß bedingten exothermen Reaktion beim Sinterschritt.

Das erfindungsgemäße Verfahren läßt sich in besonders vorteilhafter Weise auf das in der DE-A 37 02 036 offenbarte Ferritherstellungsverfahren anwenden.

Ein weiterer sich beim erfindungsgemäßen Verfahren ergebender überraschender Vorteil besteht in den besseren Dispergiereigenschaft der so gewonnenen hexagonalen Ferritpulver. Damit eignen sich die nach dem erfindungsgemäßen Verfahren erhaltenen hexagonalen Ferrite insbesondere für die Einarbeitung in organische Polymere, wie es beispielsweise bei magnetischen Aufzeichnungsmedien der Fall ist.

Anhand des folgenden Beispiels und einem nach dem Stand der Tecknik ausgeführten Vergleichsversuch sei das erfindungsgemäße Verfahren beispielhaft erläutert.

Die magnetischen Werte der Ferrite wurden in einem Schwingmagnetometer bei einer Feldstärke von 380 kA/m gemessen, und zwar die Koerzitivfeldstärke $H_c$ in [kA/m] sowie die spezifische Sättigungsmagnetisierung $M_{m/\rho}$ in $[nTm^3/g]$. Außerdem wurde noch die Schaltfeldstärkenverteilung SFD nach Williams und Comstock (AIP Conf. Proc. 5 (1971) 738) gemessen. Die Dispergiereigenschaften wurden mit Hilfe des Dispergieraufwands DA, der Zeit in Minuten, bei der sich der Glanz, gemessen mit einem Glanzmeßgerät Typ LMG 070 der Fa. Dr. Lange GmbH, Düsseldorf, um weniger als 2% pro Stunde ändert und dem Glanzendwert GE, gemessen in Prozent gegen eine Standardschicht, bestimmt.

Beispiel

Borsäure, $TiCl_4$ in Isopropanol sowie die Nitrate der übrigen, einer Kationenzusammensetzung von $BaCo_{0,5}Zn_{0,4}Ti_{0,6}Sn_{0,2}Fe_{10,3}x2,5(BaB_{1,4})$ entsprechenden Menge Metallionen wurden in Wasser gelöst, die Lösung anschließend sprühgetrocknet und das Pulver zwei Stunden lang bei 750°C getempert. Das resultierende Produkt wurde dann mit 2n-Salpetersäure in einer dem 1,5-fachen Äquivalent des löslichen Bariumanteils entsprechenden Menge eine Stunde unter Rückfluß behandelt. Die Eigenschaften des nach Auflösen der Glasmatrix verbleibenden Ferrits sind in der Tabelle angegeben.

Vergleichsversuch

Es wurde wie im Beispiel beschrieben verfahren, jedoch wurde die Glasmatrix mit halbkonzentrierter Essigsäure herausgelöst. Die Eigenschaften des Ferrits sind in der Tabelle angegeben.

Tabelle

|  | $H_c$ | $M_{m/\rho}$ | SFD | DA [min] | GE [%] |
|---|---|---|---|---|---|
| Beispiel | 91 | 54 | 0,74 | 204 | 90 |
| Verg. Vers. | 82 | 57 | 0,77 | 331 | 86,5 |

## Ansprüche

1. Verfahren zur Herstellung von hexagonalen Ferriten nach dem Glasverfahren durch Ausbilden einer Schmelze oder eines homogenen Gemisches aus den den Ferrit bildenden Metallverbindungen und mindestens einer zur Glasbildung geeigneten Verbindung, Tempern der Schmelze oder des Gemisches und anschließendes Auflösen der Glasmatrix mittels einer Säure zur Isolierung der Ferritsubstanz, dadurch gekennzeichnet, daß die zum Auflösen der Glasmatrix verwendete Säure im wesentlichen aus einer Säure mit einem chemischen Sauerstoffbedarf von weniger als ein Mol Sauerstoff pro Mol Säure besteht.

2. Verfahren gemäß Anspruch 1, dadurch gekennzeichnet, daß die zum Auflösen der Glasmatrix verwendete Säure eine Säure mit einem chemischen Sauerstoffbedarf von weniger als ein Mol Sauerstoff pro Mol Säure ist.

3. Verfahren gemäß Anspruch 1, dadurch gekennzeichnet, daß die zum Auflösen der Glasmatrix verwendete Säure eine nicht oxidierbare Säure ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 048 456 (TOKYO SHIBAURA DENKI K.K.)<br>* Seiten 1,2, Ansprüche 1,10 *<br>--- | 1-3 | C 01 G 49/00<br>G 11 B 5/706<br>H 01 F 1/11 |
| A,D | EP-A-0 136 599 (TOSHIBA)<br>* Seite 6, Zeilen 20-31; Seite 7, Zeilen 1-2 *<br>--- | 1-3 | |
| A | US-A-4 493 874 (OSAMU KUBO)<br>* Spalte 5, Anspruch 1; Spalte 6, Anspruch 6 *<br>--- | 1-3 | |
| A | DE-A-3 041 960 (TOKYO SHIBAURA DENKI K.K.)<br>--- | | |
| A | PATENT ABSTRACTS OF JAPAN, Band 9, Nr. 331 (C-321)[2054], 25. Dezember 1985; & JP-A-60 161 341 (UBE KOSAN K.K.) 23-08-1985<br>------ | | |

| RECHERCHIERTE SACHGEBIETE (Int. Cl.4) |
|---|
| G 11 B |

Der vorliegende Recherchenbericht wurde für alle Patentansprüche erstellt

| Recherchenort | Abschlußdatum der Recherche | Prüfer |
|---|---|---|
| DEN HAAG | 18-05-1989 | LIBBERECHT-VERBEECK E.M. |